# EUROPÄISCHE PATENTSCHRIFT

(11) **EP 1 381 533 B1**
(45) Veröffentlichungstag und Bekanntmachung des Hinweises auf die Patenterteilung: **12.03.2008**
(21) Anmeldenummer: 01984714.4
(22) Anmeldetag: 15.12.2001
(51) Int. Cl.: B60S 1/34, B60S 1/04

(54) **SCHEIBENWISCHVORRICHTUNG, INSBESONDERE FÜR EIN KRAFTFAHRZEUG SOWIE VERFAHREN ZU DEREN HERSTELLUNG**
WINDSHIELD WIPER, ESPECIALLY FOR MOTOR VEHICLES AND METHOD FOR THE PRODUCTION OF SAID WINDSHIELD WIPER
SYSTEME D'ESSUIE-GLACE DESTINE NOTAMMENT A UNE AUTOMOBILE, ET SON PROCEDE DE REALISATION

(30) Priorität: 22.03.2001 DE 10114033
(43) Veröffentlichungstag der Anmeldung: 21.01.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/004763
(87) Internationale Veröffentlichungsnummer: WO 2002/076797

(56) Entgegenhaltungen:
- DE-A- 19 927 067
- FR-A- 2 370 610
- US-A- 6 138 320
- PATENT ABSTRACTS OF JAPAN vol. 1996, no. 05, 31. Mai 1996 (1996-05-31) & JP 08 011681 A (MITSUBA ELECTRIC MFG CO LTD), 16. Januar 1996 (1996-01-16)

## Beschreibung

### Stand der Technik

Die Erfindung betrifft eine Scheibenwischvorrichtung sowie ein Verfahren zur Herstellung einer solchen nach Gattung der unabhängigen Ansprüche. Es sind schon zahlreiche Scheibenwischvorrichtungen bekannt, welche eine aus Rohren zusammengesetzte Grundstruktur aufweisen, die auch als Rohrplatine bezeichnet wird, an deren Enden jeweils ein Wischerlager befestigt ist. Diese Wischerlager tragen jeweils eine Wischerwelle, an deren Ende ein ein Wischblatt tragender Wischerarm befestigt ist.

Aufgrund des geringeren Gewichts werden die Wischerlager zunehmend aus Kunststoff gefertigt, wobei auf eine Lagerschale verzichtet wird und die Wischerwelle direkt im Kunststoff gelagert ist. An das Wischerlager werden bezüglich Verschleiß hohe Anforderungen gesetzt, da diese viele tausend Wischzyklen störungsfrei funktionieren müssen. Dazu müssen diese Wischerlager geschmiert werden, wobei für das Schmiermittel definierte Nuten vorgesehen sind.

Darüber hinaus ist aus der JP-A-08011681 eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruches hat den Vorteil, daß das Wischerlager im Spritzgußverfahren aus Kunststoff hergestellt werden kann, wobei die erforderliche Nut zur Aufnahme des Schmiermittels unter Verwendung eines kreiszylinderförmigen Werkzeugstempel herstellbar ist. Dies hat eine Reduzierung der Werkzeugkosten zur Folge, da keine weiteren Bearbeitungsschritte zur Erzeugung einer Schmiernut notwendig sind. Darüber hinaus kann die Wischerwelle mit geringerem Durchmesser dimensioniert werden, da keine Einstiche zur Erzeugung einer Fettkammer in der Wischerwelle notwendig sind.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn mehrere, insbesondere drei bis vier Nuten zur Aufnahme eines Schmiermittels vorgesehen sind, da auf diese Weise eine ausreichende Schmiermittelmenge in das Lager eingebracht werden kann ohne die Stabilität des Lagers insgesamt zu beeinträchtigen.

Weiterhin ist vorteilhaft, wenn die Materialanhäufung im wesentlichen quaderförmig ausgebildet ist. Quaderförmige Materialanhäufungen in der Gußform sind problemlos herzustellen ohne daß die Werkzeugkosten nennenswert steigen. Dies gilt gleichfalls für im wesentlichen halbzylinderförmige Materialanhäufungen.

Weiterhin ist als vorteilhaft anzusehen, wenn die Materialanhäufung im wesentlichen parallel zur Wischerwelle angeordnet ist. Bei dieser Anordnung kann das Schmiermittel leicht in die Nut eingebracht werden.

Besonders vorteilhaft ist jedoch, wenn die Materialanhäufung im wesentlichen schraubenförmig angeordnet ist, da hier keine Unterbrechung der Lagerfläche in einer oder mehreren bestimmten Kraftrichtungen erfolgt. Somit sind im Betrieb, d.h. bei sich drehender Lagerwelle und wechselnden Last-Richtungsänderungen immer näherungsweise gleiche Flächenanteile der Innenfläche des Wischerlagers an der Welle. Dadurch wird ein Wechsel zwischen Linienberührung und Flächenberührung vermieden.

Dabei ist es besonders vorteilhaft, wenn die Nuten einen Mindestabstand zur Grund- und Deckfläche des Wischerlagers aufweisen, insbesondere wenn diese etwa 10 mm beträgt. Auf diese Weise ergibt sich eine hohe Abdichtung des Lagers, so daß das Schmiermittel nicht ausgewaschen werden kann. Weiterhin ergibt sich eine vollständige zylindrisch radiale Lagerfläche im Bereich der Grund- und Deckfläche des Wischerlagers, wodurch die Laufeigenschaften des Wischerlagers verbessert werden.

Da über die Breite der Materialanhäufung die Breite der Nuten eingestellt werden kann, erweist es sich ferner als vorteilhaft, wenn die Materialanhäufung im wesentlichen flächig angeordnet ist. Auf diese Weise können große Schmiermittelmengen in den Lagerbereich eingebracht werden.

Das erfindungsgemäße Verfahren mit den Merkmalen des Anspruchs 9 hat den Vorteil, daß ohne weitere Verarbeitungsschritte Nuten zur Aufnahme eines Schmiermittels auf der Innenfläche des Wischerlagers an der Gleitfläche zwischen Wischerlager und Wischerwelle entstehen. Dies ist durch die Verwendung eines einfachen zylindrischen Werkzeugstempels möglich, wobei beliebige Kammergeometrien durch dieses Verfahren herstellbar sind. Insbesondere können auf diese Weise schraubenförmige Kammern trotz einer geradlinigen Werkzeugöffnung erzeugt werden.

Außerdem kann die Nut durch dieses Verfahren vollständig innenliegend ausgeführt werden, so daß Schmiermittel, das vor dem Einfügen der Wischerwelle in das Wischerlager eingebracht wurde, nicht entweichen oder ausgewaschen werden kann.

### Zeichnungen

Ausführungsbeispiele der Erfindung sind in den Zeichnungen dargestellt und in der nachfolgenden Beschreibung näher erläutert. Es zeigen:
Figur 1, eine erfindungsgemäße Scheibenwischvorrichtung in schematischer Darstellung.
Figur 2, ein Wischerlager gemäß der Erfindung in perspektivischer Darstellung,
Figur 3a, 3b und 3c, verschiedene Schnitte durch den hohlzylindrischen Abschnitt des Wischerlagers,
Figur 4a, ein Wischerlager mit schraubenförmigen Nuten in perspektivischer Darstellung,
Figur 4b ein Wischerlager mit schraubenförmigen Nuten in einer perspektivischen Schnittdarstellung.
Figur 5, Längsschnitte durch Wischerlager mit verschiedenen Nuten.

### Beschreibung der Ausführungsbeispiele

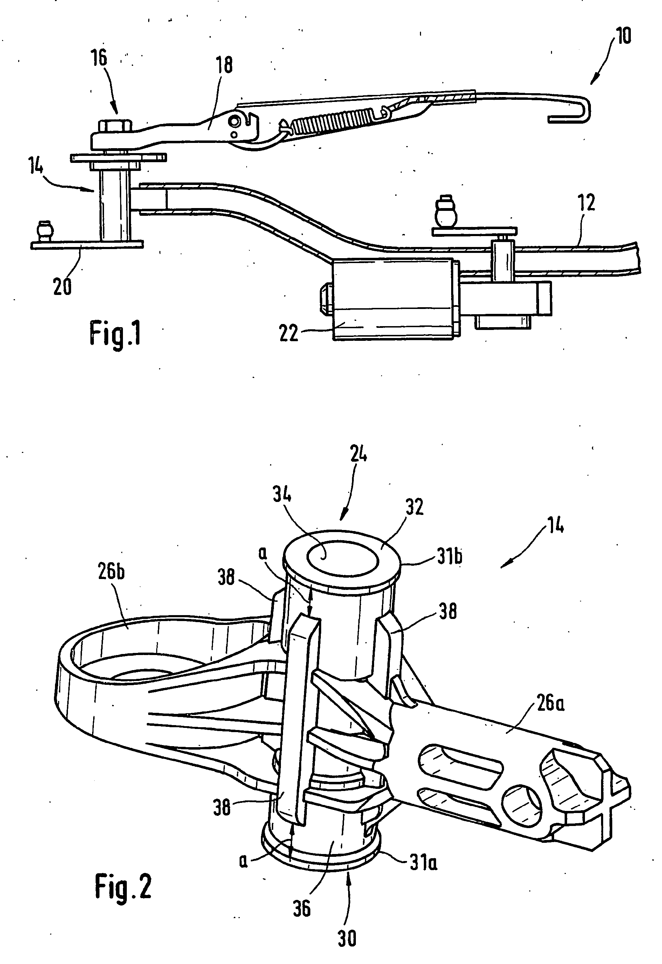

In Figur 1 ist eine Scheibenwischvorrichtung 10 schematisch dargestellt. Diese besteht im wesentlichen aus einer Rohrplatine 12, die an einem Ende ein Wischerlager 14 trägt. In diesem Wischerlager ist eine Wischerwelle 16 gelagert, die an einem Ende drehfest mit einem Wischerarm 18 verbunden ist. Auf der anderen Seite ist die Wischerwelle 16 mit einer Schwenkkurbel 20 drehfest verbunden, welche über ein aus Einfachheitsgründen nicht dargestelltes Gestänge von einem Wischermotor 22 angetrieben wird.

Figur 2 zeigt ein Wischerlager 14 einer erfindungsgemäßen Scheibenwischvorrichtung 10 in einer perspektivischen Darstellung. Dieses Wischerlager 14 besteht im wesentlichen aus einem hohlzylindrischen Abschnitt 24, in dem die Wischerwelle 16 lagerbar ist. Quer zur Wischerwelle sind Befestigungsbereiche 26a, 26b angeformt, die zur Befestigung des Wischerlagers 14 einerseits an der Rohrplatine 12 und andererseits an der Fahrzeugkarosserie dienen. Zur Verbesserung der Stabilität der Verbindung zwischen dem hohlzylindrischen Abschnitt 24 und den Befestigungsbereichen 26a, 26b sind diese mittels Befestigungsrippen 28 am Abschnitt 24 befestigt. Darüber hinaus weist der hohlzylindrische Abschnitt 24 eine Grundfläche 30, sowie eine Deckfläche 32 auf, die ihn in seiner Länge begrenzen. An der Grundfläche 30 sowie an der Deckfläche 31 weist der Abschnitt 24 außerdem noch jeweils einen Verstärkungsring 31a, b auf, der auch einstückig mit dem Abschnitt 24 ausgebildet sein kann.

Die Gleitfläche zwischen Wischerwelle 16 und hohlzylindrischem Abschnitt 24 wird durch eine Innenfläche 34 des hohlzylindrischen Abschnitts 24 erzeugt. Auf einer Außenfläche 36 des hohlzylindrischen Abschnitts 24, die einen Zylindermantel beschreibt, sind rippenartige Materialanhäufungen 38 angeordnet, die sich axial am hohlzylindrischen Abschnitt 24 entlang erstrecken. Diese Materialanhäufungen 38 sind jedoch nur bis auf einen Mindestabstand a an die Grund- Deckfläche 30, 32 des hohlzylindrischen Abschnitts 24 geführt.

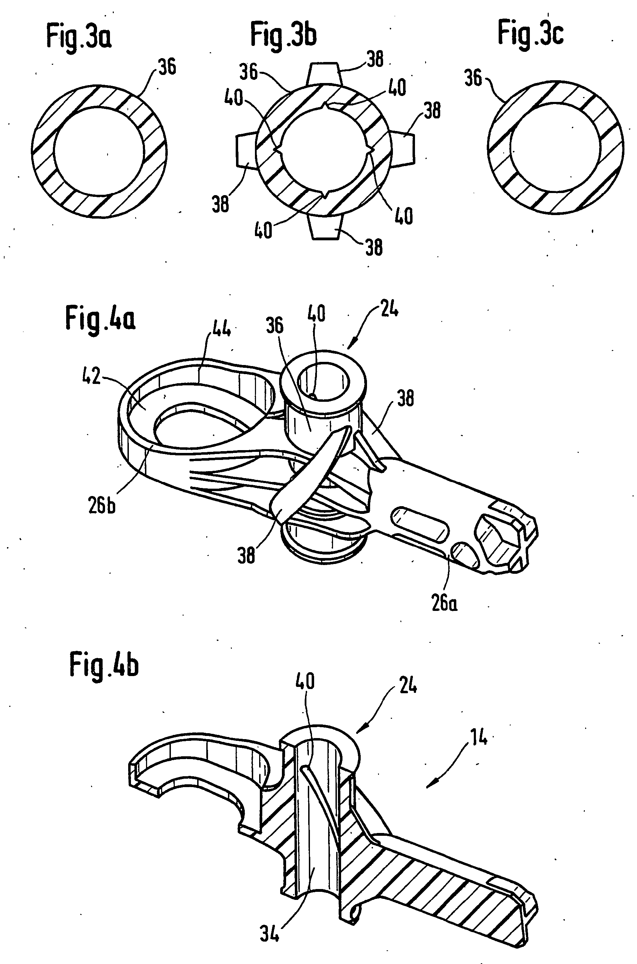

In den Figuren 3a, 3b und 3c sind Querschnitte durch dem hohlzylindrischen Abschnitt 24 des Wischerlagers 14 dargestellt. Figur 3a zeigt eine Grundfläche 30 des Abschnitts 24 und Figur 3c, die Deckfläche 32 des Abschnitts 24 jeweils knapp über- bzw. unterhalb der Verstärkungsringe 31a bzw. 31b. In Figur 3b ist ein Querschnitt durch die - in axialer Richtung - Mitte zwischen Grundfläche 30 und Deckfläche 32 dargestellt. Die Befestigungsbereiche 26 (Figur 2) und die Verstärkungsringe 31a, 31b sind der Einfachheit weggelassen.

In Figur 3b sind vier Materialanhäufungen 38 zu sehen, die gleichmäßig über die Außenfläche 36 des Abschnitts 24 verteilt sind. Jeweils auf der korrespondierenden Innenfläche 34 des zylindrischen Abschnitts 24 ist eine Nut 40 angeordnet. Dies Nut 40 entsteht dadurch, daß beim Erkalten des Kunststoffs im Gußverfahren durch die Materialanhäufungen 38 ein erhöhter Schwund verursacht wird, der zu Einfallstellen führt. Die Materialanhäufungen 38 werden dabei gezielt so ausgebildet, daß die Einfallstellen die Nuten 40 ergeben, die zur Aufnahme eines Schmiermittels für das Wischerlager 14 dienen können. Die Materialanhäufungen 38 sind dabei mindestens ebenso dick, wie die Wandstärke des hohlzylindrischen Abschnitts 24, um eine ausreichenden Tiefe der Nuten 40 zu erreichen.

In den Figuren 3a und 3c, also in den Bereichen der Grund- und Deckfläche 30, 32, sind an der Außenfläche 36 keine Materialanhäufungen 38 ausgebildet, weshalb auch keine Nuten 40 in diesen Bereichen entstanden sind. Damit ergibt sich eine ideale Abdichtung der Wischerlager 14.

In Figur 4a ist wie in Figur 2 ein Wischerlager 14 in perspektivischer Darstellung gezeigt. Hier sind die Materialanhäufungen 38 jedoch schraubenförmig auf der Außenfläche 36 des zylindrischen Abschnitts 24 angeordnet. Deutlich zu sehen sind hier auch die beiden Befestigungsbereiche 26a und 26b. Ein Befestigungsbereich 26a ist dabei zylindrisch ausgebildet. Dieser wird in die Rohrplatine 12 der Scheibenwischvorrichtung 10 eingeschoben und beispielsweise durch verkrimpen arretiert. Der andere Befestigungsbereich 26b ist als Auge 42 ausgeführt, das von einem Kragen 44 umschlossen wird. Dieser dient zur Befestigung der Scheibenwischvorrichtung 10 an der Karosserie eines Fahrzeugs. In Figur 4b ist ein Längsschnitt durch ein Wischerlager 14 nach Figur 4a dargestellt. Deutlich zu sehen ist hier die Innenfläche 34 des hohlzylindrischen Abschnitts 24. Dieser weist - korrespondierend an den Materialanhäufungen 38 aus Figur 4a-die schraubenförmige Nut 40 auf, die zur Aufnahme eines Schmiermittels dient.

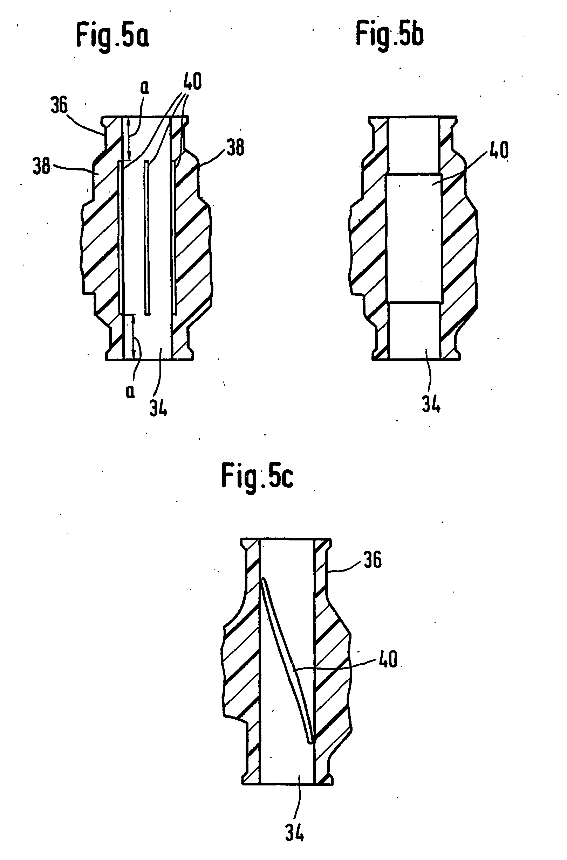

In den Figuren 5a, 5b und 5c sind einige Längsschnitte durch verschiedene zylindrische Abschnitte 24 einer erfindungsgemäßen Scheibenwischvorrichtung 10 gezeigt. In Figur 5a sind die Nuten 40, die sich parallel zur Drehachse der Wischerwelle erstrecken, dargestellt. Diese sind jeweils mit einem Mindestabstand A von der Grund- bzw. Deckfläche 30, 32 des zylindrischen Abschnitts 24 entfernt, um eine ausreichende Dichtigkeit des Lagers zu gewährleisten. In Figur 5b sind die Nuten 40 sehr breit ausgebildet, so daß die Nut 40 eher einem flächigen Bereich entspricht. In Figur 5c ist die Nut 40 schraubenförmig angeordnet.

In einer Weiterbildung ist es auch möglich, Bohrungen in den Materialhäufungen 38 vorzunehmen, durch die das Schmiermittel später, beispielsweise bei einer Wartung, nachgefüllt werden kann. Zur Erhöhung der Stabilität ist es auch noch denkbar, die Verstärkungsringe 31a, b aus Metall auszubilden und das übrige Wischerlager an die Ringe anzuformen. Auch die Materialhäufungen 38 können aus einem anderen Material bestehen als die übrigen Lagerbestandteile. In diesem Fall müssen die verschiedenen Materialien jedoch zeitnah zueinander gespritzt werden.

Prinzipiell kann das Verfahren oder das Wischerlager 14 auch mit anderen Materialien als Kunststoff durch- bzw. ausgeführt werden.

## Patentansprüche

1. Scheibenwischvorrichtung, insbesondere für ein Kraftfahrzeug, mit mindestens einem im wesentlichen aus einem spritzbaren Material, insbesondere Kunststoff bestehenden Wischerlager (14), in dem eine Wischerwelle (16) zumindest pendelbar gelagert ist, wobei das Wischerlager (14) im Bereich der Wischerwelle (16) einen im wesentlichen hohlzylindrischen Abschnitt (24) aufweist an dessen Innenfläche (34) mindestens eine Nut (40) vorgesehen ist, wobei an den Außenflächen des hohlzylindrischen Abschnitts (24), mindestens eine, mit der Nut (40) korrespondierende, rippenartige Materialanhäufung (38) vorgesehen ist, die bezüglich der Drehachse der Wischerwelle (16) in radialer Auswärtsrichtung der Nut (40) angeordnet ist, **dadurch gekennzeichnet, daß** sich die mit der Nut (40) korrespondierende, rippenartige Materialanhäufung (38)axial oder schraubenförmig am hohlzylindrischen Abschnitt (24) entlang erstreckt.

2. Vorrichtung nach einem der vorhergehenden Ansprüche, **dadurch gekennzeichnet, daß** mehrere, insbesondere drei bis vier, vorzugsweise vier Nuten (40) zur Aufnahme eines Schmiermittels vorgesehen sind.

3. Vorrichtung nach Anspruch 1 oder 2, **dadurch gekennzeichnet, daß** die Materialanhäufung (38) im wesentlichen quaderförmig ausgebildet ist.

4. Vorrichtung nach einem der Ansprüche 1 bis 3, **dadurch gekennzeichnet, daß** die Materialanhäufung (38) im wesentlichen halbzylinderförmig ausgebildet ist.

5. Vorrichtung nach einem der vorhergehenden Ansprüche, **dadurch gekennzeichnet, daß** die Materialanhäufung (38) im wesentlichen parallel zur Wischerwelle (16) angeordnet ist.

6. Vorrichtung nach einem der Ansprüche 1 bis 4, **dadurch gekennzeichnet, daß** die Materialanhäufung (38) im wesentlichen schraubenförmig angeordnet ist.

7. Vorrichtung nach einem der Ansprüche 1 bis 5, **dadurch gekennzeichnet, daß** die Materialanhäufung (38) im wesentlichen flächig angeordnet ist.

8. Vorrichtung nach einem der vorhergehenden Ansprüche, **dadurch gekennzeichnet, daß** die mindestens eine Nut (40) einen Mindestabstand (a) von insbesondere 5mm bis 15mm, vorzugsweise 10mm zur Grund- und Deckfläche (30, 32) des hohlzylindrischen Abschnitts (24) aufweist.

9. Verfahren zur Herstellung einer Scheibenwischvorrichtung nach einem der vorhergehenden Ansprüche, mit mindestens einem Wischerlager (14) welches zur Lagerung einer Wischerwelle (16) einen im wesentlichen hohlzylindrischen Abschnitt (24) aufweist, wobei durch gezielte rippenartige Materialanhäufung (38) an den Außenflächen des hohlzylindrischen Abschnitts (24) mindestens eine Nut (40) an der Gleitfläche zwischen Wischerlager (14) und Wischerwelle (16) durch Materialschrumpfung erzeugt wird, **dadurch gekennzeichnet, daß** sich die mit der Nut (40) korrespondierende, rippenartige Materialanhäufung (38) axial oder schraubenförmig am hohlzylindrischen Abschnitt (24) entlang erstreckt.

## Claims

1. Windscreen wiper device, especially for a motor vehicle, with at least one wiper bearing (14) which is essentially composed of an injection-mouldable material, in particular plastic, and in which a wiper shaft (16) is mounted in a manner such that it can at least oscillate, wherein the wiper bearing (14) has, in the region of the wiper shaft (16), an essentially hollow-cylindrical section (24), on the inner surface (34) of which at least one groove (40) is provided, wherein at least one rib-like material accumulation (38) is provided on the outer surfaces of the hollow-cylindrical section (24), said material accumulation corresponding to the groove (40) and being arranged, with respect to the axis of rotation of the wiper shaft (16), in the radial outwards direction of the groove (40), **characterized in that** the rib-like material accumulation (38) corresponding to the groove (40) extends axially or helically along the hollow-cylindrical section (24).

2. Device according to Claim 1, **characterized in that** more than one, in particular three to four, preferably four grooves (40), are provided for receiving a lubricant.

3. Device according to Claim 1 or 2, **characterized in that** the material accumulation (38) is of essentially cuboidal design.

4. Device according to one of Claims 1 to 3, **characterized in that** the material accumulation (38) is of essentially semi-cylindrical design.

5. Device according to one of the preceding claims, **characterized in that** the material accumulation (38) is arranged essentially parallel to the wiper shaft (16).

6. Device according to one of Claims 1 to 4, **characterized in that** the material accumulation (38) is arranged essentially helically.

7. Device according to one of Claims 1 to 5, **characterized in that** the material accumulation (38) is arranged in an essentially planar manner.

8. Device according to one of the preceding claims, **characterized in that** the at least one groove (40) has a minimum distance (a) of, in particular, 5 mm to 15 mm, preferably 10 mm, from the base and top surfaces (30, 32) of the hollow-cylindrical section (24).

9. Method for the production of a windscreen wiper device according to one of the preceding claims, with at least one wiper bearing (14) which has an essentially hollow-cylindrical section (24) for the mounting of a wiper shaft (16), wherein, by means of specific, rib-like material accumulation (38) on the outer surfaces of the hollow-cylindrical section (24), at least one groove (40) is produced on the sliding surface between wiper bearing (14) and wiper shaft (16) by material shrinkage, **characterized in that** the rib-like material accumulation (38) corresponding to the groove (40) extends axially or helically along the hollow-cylindrical section (24).

## Revendications

1. Dispositif d'essuie-glace notamment pour un véhicule automobile comportant au moins un palier d'essuie-glace (14) réalisé principalement en une matière d'injection, notamment en matière plastique, et recevant l'arbre d'essuie-glace (16) au moins selon un mouvement pendulaire,
le palier d'essuie-glace (14) ayant au niveau de l'arbre d'essuie-glace (16) un segment (24) principalement cylindrique creux dont la surface intérieure (34) comporte au moins une rainure (40),
la surface extérieure du segment cylindrique creux (24) ayant au moins une accumulation de matière (38) en forme de nervure correspondant à la rainure (40) et qui est installée par rapport à l'axe de rotation de l'arbre d'essuie-glace (16) dans la direction radiale vers l'extérieur de la rainure (40),
**caractérisé en ce que**
l'accumulation de matière (38) en forme de nervure qui correspond à la rainure (40) s'étend axialement ou en hélice le long du segment cylindrique creux (24).

2. Dispositif selon la revendication 1,
**caractérisé en ce que**
plusieurs rainures (40), de préférence trois à quatre, et notamment quatre rainures (40), sont prévues pour recevoir un agent lubrifiant.

3. Dispositif selon la revendication 1 ou 2,
**caractérisé en ce que**
l'accumulation de matière (38) est principalement cubique.

4. Dispositif selon l'une des revendications 1 à 3,
**caractérisé en ce que**
l'accumulation de matière (38) est principalement de forme semi-cylindrique.

5. Dispositif selon l'une des revendications précédentes,
**caractérisé en ce que**
l'accumulation de matière (38) est pratiquement parallèle à l'arbre d'essuie-glace (16).

6. Dispositif selon l'une des revendications 1 à 4,
**caractérisé en ce que**
l'accumulation de matière (38) est principalement hélicoïdale.

7. Dispositif selon l'une des revendications 1 à 5,
**caractérisé en ce que**
l'accumulation de matière (38) est principalement en surface.

8. Dispositif selon l'une des revendications précédentes,
**caractérisé en ce qu'**
au moins une rainure (40) a une distance minimale (a), notamment de 5 mm à 15 mm, de préférence 10 mm par rapport au fond et à la surface supérieure (30, 32) du segment cylindrique creux (24).

9. Procédé de fabrication d'un dispositif d'essuie-glace selon l'une des revendications précédentes, comportant au moins un palier d'essuie-glace (14) ayant un segment (24) pratiquement cylindrique creux pour recevoir un arbre d'essuie-glace (16),
et par une accumulation de matière en forme de nervure, précise (38) à la surface extérieure du segment cylindrique creux (24), on réalise au moins une rainure (40) dans la surface de glissement entre le palier d'essuie-glace (14) et l'arbre d'essuie-glace (16) par rétrécissement de la matière,
**caractérisé en ce que**
l'accumulation de matière (38) en forme de nervure correspondant à la rainure (40) s'étend axialement ou suivant une forme hélicoïdale sur le segment (24) en forme de cylindre creux.
